# EUROPEAN PATENT APPLICATION

(11) **EP 2 963 893 A1**
(43) Date of publication of application: **06.01.2016**
(21) Application number: 14306089.5
(22) Date of filing: 03.07.2014
(51) Int. Cl.: H04L 29/08, H04W 4/00, H04W 4/02, H04W 4/04

(54) **Method for displaying information on a mobile device dependent on the geographical position of a mobile device with respect to a stationary device and on its physical movement**

(71) Applicant: Intellicore Services, 06560 Valbonne Sophia Antipolis (FR)
(72) Inventor: Piveteau, Romain, 94800 Villejuif (FR); Trotobas, Christian, 06130 Plascassier (FR); Martiquet, Nicolas, 06600 Antibes (FR)
(74) Representative: de Zeeuw, Johan Diederick

(57) **Abstract**

The invention relates to a method for displaying information on a mobile device, depending on the position of the mobile device with respect to at least one stationary device, such as an iBeacon, the mobile device and the stationary device being configured for short distance communication in a determined zone around the stationary device, wherein the mobile device comprises a display and positioning and/or movement detection application, the method comprising the steps of:
a) establishing communication between the mobile device and a first stationary device to thereby generate a communication signal which enables the mobile device to display information;
b) receiving the communication signal and displaying the corresponding information on the mobile device;
c) monitoring the communication between the mobile device and the stationary device to identify possible interruption or attenuation of the communication;
d) in case the mobile device comprises a positioning application, using said positioning application to generate a first parameter, wherein the value of the first parameter corresponds to a first geographical position of the mobile device;
and according to a first option:
e) detecting an interruption or attenuation of the
communication signal,
f1) using the positioning application to generate a second parameter, wherein the value of the second parameter corresponds to a second geographical position of the mobile device;
f2) comparing the value of the first parameter with the value of the second parameter to retrieve a matching value;
f3) in case a matching value is retrieved, continuing to display the information on the mobile device, and
f4) in case no matching value is retrieved, ending the display of the information on the mobile device;
or according to second option:
g1) in case the mobile device comprises a movement detection application, using the movement detection application to generate a third parameter, wherein the value of the third parameter corresponds to either a detection of movement of the mobile device or a detection of non-movement of the mobile device;
g2) in case the third parameter corresponds to non-movement of the mobile, continuing to display the information on the mobile device, and
g3) in case the third parameter corresponds to movement of the mobile device, ending the display of the information on the mobile device.

## Description

### Introduction

The present invention relates to a method for displaying information on a mobile device, depending on the geographical position of the mobile device with respect to at least a first stationary device, as well as on the physical movement of the mobile device itself, the mobile device and the stationary device being configured for short distance communication in a determined zone around the stationary device, wherein the mobile device comprises a display and a either a movement detector application or a positioning application.

The present invention relates to a method and device wherein a communication is possible between a mobile device and a stationary device, the stationary device being able to communicate with the mobile device by means of short distance communication. This short distance communication could comprise wireless communication protocols which are known in the prior art as Bluetooth^{®} or other wireless communication protocols. Alternatively, the short distance communication could comprise Near Field Communication (NFC).

The method and the device, according to the present invention are particularly adapted for communication between a mobile device such as a smartphone and a stationary device such as an iBeacon.

### Background of the Invention

According to the prior art, it is known that a mobile device can receive information from a stationary device to provide information to the user of the mobile device of an event or activity in the vicinity of the stationary device. In case of NFC communication, the user of a mobile device can, for instance, position his mobile device in front of a tag in order to allow the mobile device to read the tag and to thereby initiate a communication procedure which allows the user to receive a specific amount of data on his mobile device. This sort of communication could be useful, for instance, in a store wherein the information received on the mobile device could comprise information about special offers which might be of interest to the user of the mobile device. Recently, Apple^{®} introduced iBeacons which are small, low-powered transmitters adapted to communicate with mobile devices in the vicinity of the iBeacons. iBeacons use small wireless sensors equipped with Bluetooth lowenergy (BLE) that can be detected by a mobile device at a wide variety of ranges, allowing for different actions depending on a distance from each beacon. Sensing both region and range, the use of iBeacons provides with a sort of indoor location system with much greater precision than any indoor GPS system could obtain.

Possible use of iBeacons is again at the retail level whereby stores can use iBeacons as a means to draw customers inside. Once within the beacon's wireless region near the entrance, a retailer can transmit a coupon or sales promotion that could beckon potential customers. Once inside the store, several indoor beacons can allow the mobile device to triangulate a customer's position and calculate the micro location of a customer to trigger information on the products near the customer.

Shop owners could reward customers for spending a certain amount of time within their shop and provide coupons to customers who appear to have come back to the shop on a regular basis. For instance, iBeacons could also be used to identify a repeat customer, for example in a restaurant or at the counter of coffee shop. Once the repeat customer has been identified, the mobile device could propose to the repeat customer to prepare their regular order and start preparing the preferred food or drink of the customer who is still waiting in line to be served.

It should be understood that the use of iBeacons in a store is just an example of a huge variety of possibilities for using iBeacons. Another practical example for the use of iBeacons is the use of iBeacons in an area wherein the user of a mobile device spends time at different locations in a set environment. This environment could, for instance, be a trade show or a museum. An example of the use in a museum could be that when leaving the museum and entering the bookstore of the museum, the user of the mobile device could receive information about those artists who apparently have drawn the specific attention of the visitor during his or her visit in the museum. This information could be based on the information obtained with the use of iBeacons which allows calculating the time a visitor has spent in front of paintings of a specific artist. This information could be used to direct the visitor to the bookstore of the museum and to the bookshelves containing books about said artist.

One drawback is the fact that related to the known use of NFC communication means and of the use of iBeacons, when providing specific information to customers in the vicinity of either the NFC tags or iBeacons, the communication between a specific tag or iBeacon with the mobile device could be interrupted or attenuated, for instance when a human being walks between an iBeacon and the mobile device.

For instance, if a visitor of a museum is in the vicinity of an iBeacon, the visitor could receive information on his mobile device relating to the paintings which are exposed in the vicinity of said iBeacon. If, the communication between the mobile device and said iBeacon is then interrupted or attenuated, the reason for interruption could have several causes. A normal cause for the interruption or attenuation of the communication between a specific iBeacon and a mobile device is the fact that the distance between the iBeacon and the mobile device has become too great to allow short distance communication. If this is the case, it would mean that the mobile device has moved away from the iBeacon. This would indicate that the visitor of the museum has left his initial position and is moving towards another part of the exhibition and the mobile device should not display the information anymore related to the said iBeacon.

However, communication between a first iBeacon and a mobile device could also be interrupted or attenuated without the mobile device having been moved away from the iBeacon. In such a case, the interruption or attenuation of the communication between the iBeacon and the mobile device is, for instance, due to the presence of an obstacle between the iBeacon and the mobile device. In case of the example of a museum, the obstacle could, for instance, be formed by other visitors of the museum who have positioned themselves in-between the iBeacon and the mobile device. If the mobile device has not moved away from the iBeacon, the visitor of the museum equipped with the mobile device is still in the vicinity of the same paintings for which he has received information, whereas the mobile device acts as if the visitor had moved away because the communication with the iBeacon has been interrupted or attenuated by the presence of other visitors in-between. In that case, the visitor could be interested in keeping the information relating to said paintings available on the mobile device.

In view of the observations above, it appears that there is need for allowing the mobile device to make a distinction between interruption of communication with a specific iBeacon due to the mobile device being moved away from the iBeacon and an interruption of the communication between said iBeacon and said mobile device due to any cause of interruption or attenuation of said communication.

The present invention, according to a first aspect of the invention, relates to a method for displaying information on a mobile device, depending on the position of the mobile device with respect to at least one stationary device, such as an iBeacon, the mobile device and the stationary device being configured for short distance communication in a determined zone around the stationary device, wherein the mobile device comprises a display and positioning and/or movement detection application, the method comprising the steps of:
a) establishing communication between the mobile device and a first stationary device to thereby generate a communication signal which enables the mobile device to display information;
b) receiving the communication signal and displaying the corresponding information on the mobile device;
c) monitoring the communication between the mobile device and the stationary device to identify possible interruption or attenuation of the communication;
d) in case the mobile device comprises a positioning application, using said positioning application to generate a first parameter, wherein the value of the first parameter corresponds to a first geographical position of the mobile device;
   and according to a first option:
e) detecting an interruption or attenuation of the communication signal,
f1) using the positioning application to generate a second parameter, wherein the value of the second parameter corresponds to a second geographical position of the mobile device;
f2) comparing the value of the first parameter with the value of the second parameter to retrieve a matching value;
f3) in case a matching value is retrieved, continuing to display the information on the mobile device, and
f4) in case no matching value is retrieved, ending the display of the information on the mobile device;
   or according to second option:
g1) in case the mobile device comprises a movement detection application, using the movement detection application to generate a third parameter, wherein the value of the third parameter corresponds to either a detection of movement of the mobile device or a detection of non-movement of the mobile device;
g2) in case the third parameter corresponds to non-movement of the mobile, continuing to display the information on the mobile device, and
g3) in case the third parameter corresponds to movement of the mobile device, ending the display of the information on the mobile device.

According to the invention, when a communication is being established between a mobile device and a first stationary device, the mobile device will be able to receive a communication signal which allows the mobile device to display information. This information can be made accessible for a user of the mobile device by displaying said information on the display of the mobile device. In the event the mobile device is used in a museum, the information received on the mobile device could be an explanation of the content visible on a painting nearby the stationary device.

The method according to the present invention allows the information to be accessible on the display of the mobile device as long as the mobile device does not move away from the stationary device, even if the communication signal is interrupted or attenuated by any obstacle. In order to allow this, in the event of interruption or attenuation of communication between the mobile device and the stationary device, the mobile device will check with the movement detector of the mobile device if a significant move was made by the mobile device or not.

Alternatively, the mobile device will retrieve a first location information from the positioning application of the mobile device as soon as it receives any communication signal from any stationary device, then retrieve a second location information from the positioning application of the mobile device when the communication signal becomes interrupted or attenuated. If, after interrogating the Movement Detector, no movement is identified, or if, comparing the first and the second location information from the positioning application, a matching value is retrieved, apparently the mobile device has not moved in the interval between generating the first and the second parameter. If, however, no matching value is retrieved, then apparently the mobile device has been moved from a first geographical position to a second geographical position which means that the mobile device has moved away from the stationary device that was used to retrieve the information visible on the mobile device.

According to the method of the present invention, if the mobile device has not moved, the information on the mobile device will remain accessible. If, however, the mobile device has moved, the information is supposedly no longer of relevance and will no longer be displayed on the mobile device.

According to the invention, it is possible that the position and/or movement detection application comprises a Global Positioning System (GPS) application.

According to the invention, it is possible that the movement detection application uses inputs from a gyroscope.

According to the present invention, it is possible that the stationary device and the mobile device are configured for communicating using Near Field Communication (NFC) protocol.

According to the present invention, it is possible that the stationary device and the mobile device are configured to allow communication using a Quick Response Code (QR Code).

According to the present invention, it is possible that the stationary device is a transmitter.

According to the present invention, it is possible that the stationary device is adapted for communication with the mobile device using Bluetooth low energy™ technology.

According to the present invention, it is possible that the stationary device is adapted to be detected by the mobile device in the determined zone around said stationary device.

According to a second aspect of the invention, the invention relates to a computer program product comprising stored computer-executable instructions, which, when executed by a computer system, implements the method of the invention.

According to a third aspect of the invention, the invention relates to a mobile device comprising communication means for allowing short distance communication with at least one stationary device to allow the mobile device to receive a communication signal from said stationary device, the mobile device further comprising a display for displaying information corresponding to the communication signal received by the mobile device, a positioning or movement detection application with a positioning application adapted to generate a parameter corresponding to the geographical position of said mobile device or a movement detector adapted to generate a parameter corresponding to the movement or non-movement of the mobile device, means for monitoring the communication between the mobile device and said at least one stationary device, and processing means adapted to either generate an instruction for the movement detector to generate a parameter relating to the (non) movement of the mobile, or to generate a first instruction for the positioning application to generate a first parameter wherein the value of the first parameter corresponds to the geographical position of the mobile device before interruption or attenuation of a communication between the mobile device and the at least one stationary device, and a second instruction for the positioning application to generate a second parameter, upon interruption or attenuation of the communication between the mobile device and the at least one stationary device, wherein the second parameter corresponds to the geographical position of the mobile device, wherein the processing means are adapted to compare said first and said second parameter to retrieve a matching value.

According to the invention, it is possible that the processing means are adapted to terminate the displaying of said information on said mobile device if the parameter generated by the movement detector corresponds to the movement of the mobile device or if said matching value between the first and second parameter generated by the positioning means is not retrieved.

According to the invention, it is possible that the movement detection application uses inputs from a gyroscope.

According to the invention, it is possible that the positioning and/or movement detection application comprises a Global Positioning System (GPS) or application.

### Brief Description of the Drawings

The invention will be described in detail making reference to the accompanying drawings, wherein:
- Figure 1 shows, in the form of a flow chart, the different steps of the method according to the present invention when using a movement detector application, and
- Figure 2 shows, in the form of a flow chart, the different steps of the method according to the present invention when using a positioning application.

According to the present invention, the mobile device could, for instance, be a smartphone provided with a number of applications to allow the smartphone to communicate with a variety of stationary devices. To allow the smartphone to communicate with a specific tag such as a barcode or, for instance, a QR Code, the smartphone could be provided with a camera. In order to allow access to the Internet, the smartphone could be provided with applications to allow communication of the smartphone over the Internet. To allow the smartphone to communicate with other mobile devices, the smartphone could be provided with applications to allow communication using, for instance, GSM, GPRS, or comparable protocols adapted to allow mobile device communication. Moreover, the smartphone could be provided with an application to allow wireless short distance communication, using for instance protocols like Bluetooth^{®} or BLE, or NFC.

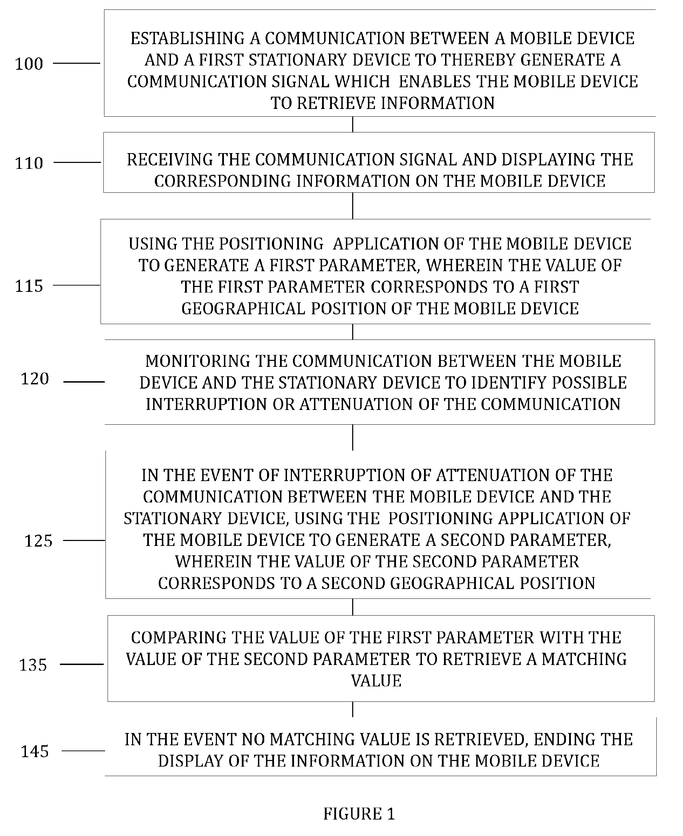

In Figure 1, the method according to the present invention is shown in the form of a flow chart in case the positioning application of the positioning application. This positioning application could comprise a Global Positioning System (GPS) application. As shown in the flow chart, in a first step 100 of the method, a communication is established between a mobile device and a stationary device to thereby generate a communication signal which enables the mobile device to retrieve information.

As shown in Figure 1, the second step 110 of the method according to the present invention comprises the receiving of the communication signal and displaying of the corresponding information on the mobile device. In order to allow the mobile device to display the information, the mobile device is provided with an adapted display, which could include an LCD screen. The third step 115 of the method according to Figure 1 comprises the step of using the positioning application, such as GPS application, of the mobile device to generate a first parameter, where the value of this first parameter corresponds to a first geographical position of the mobile device. The fourth step 120 of the method according to Figure 1 comprises the step of monitoring the communication between the mobile device and the stationary device to identify a possible interruption or attenuation of the communication. Process means in the mobile device will be able to act as soon as a possible interruption of the communication has been identified.

According to the present invention, the step of generating a parameter corresponding to the geographical position of the mobile device is repeated in step five 125 of the method. The further parameter is generated upon interruption or attenuation of the communication The positioning application of the mobile device is used to generate a second parameter, where the value of the second parameter corresponds to a second geographical position of the mobile device.

The generation of the first and the second parameter allows to monitor whether the mobile device is at a stationary position or whether the mobile device is actually moving away from its initial position wherein the mobile device was in communication with the stationary device.

In order to establish whether the mobile device is moving or not with respect to the stationary device according to step six 135, the value of the first parameter is compared with the value of the second parameter in order to retrieve a matching value. If the first parameter generated by means of the positioning application matches with the second parameter generated by means of the positioning application of the mobile device, apparently the mobile device has not moved in the interval between the generation of the first and the second parameter with respect to its initial position. If a matching value is retrieved, apparently the mobile device is still at its initial position, despite the fact that the communication between the mobile device and the stationary device has been interrupted. Where it is established that the mobile device is not moving with respect to the stationary device, as shown in step seven 145 of the present invention, the information on the mobile device continues to be displayed. This allows the user of the mobile device who apparently did not move from their initial position to retain access to the information which is on display on the mobile device.

However, where no matching value is retrieved between the first and the second parameter corresponding to the geographical positions of the mobile device, apparently the mobile device has been moving away from its initial position between the time interval that has lapsed between the generation of the first and the second parameter corresponding to the geographical position of the mobile device. When no matching value is retrieved, the information will no longer be displayed on the mobile device. If the user of the mobile device is apparently moving away from their initial position, the information which was on display on the mobile device no longer does not need to remain accessible for the user of the mobile device. The fact that the information is no longer displayed on the mobile device gives rise to the opportunity to replace the information on the mobile device with information which could be the result of communication of the mobile device with a second or further stationary device, provided that the mobile device is in the vicinity of the second or further stationary device in order to allow short distance communication with said second or said further stationary device.

According to the present invention, a look-up table can be used wherein the look-up table provides values corresponding to the geographical position of a first, a second and further stationary device. The look-up table can be used to compare the actual geographical location of the mobile device with the several geographical locations of the first, second and further stationary devices. The use of a look-up table can complete the information obtained by using the GPS application of the mobile device to retrieve the actual position of the mobile device.

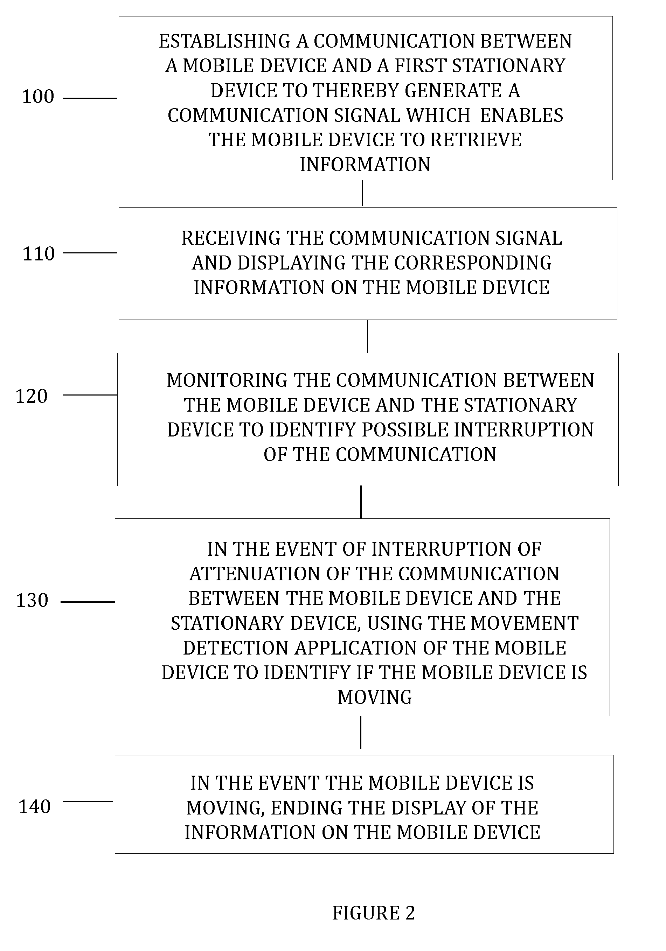

In Figure 2, the method according to the present invention is shown in the form of a flow chart, wherein the second option of the method, using a movement detector, is selected. As shown in the flow chart, in a first step 100 of the method, a communication is established between a mobile device and a stationary device to thereby generate a communication signal which enables the mobile device to display information.

According to the present invention, the mobile device could, for instance, be a smartphone provided with a number of applications to allow the smartphone to communicate with a variety of stationary devices. To allow the smartphone to communicate with a specific tag such as a barcode or, for instance, a QR Code, the smartphone could be provided with a camera. In order to allow access to the Internet, the smartphone could be provided with applications to allow communication of the smartphone over the Internet. To allow the smartphone to communicate with other mobile devices, the smartphone could be provided with applications to allow communication using, for instance, GSM, GPRS, or comparable protocols adapted to allow mobile device communication. Moreover, the smartphone could be provided with an application to allow wireless short distance communication, using for instance protocols like Bluetooth^{®} or BLE, or NFC.

As shown in Figure 2, the second step 110 of the method according to the present invention comprises receiving the communication signal and displaying of information on the mobile device. In order to allow the mobile device to display the information, the mobile device is provided with an adapted display, which could include an LCD screen. The third step 120 of the method according to the present invention comprises the step of monitoring the communication between the mobile device and the stationary device to identify possible interruption or attenuation of the communication. Process means in the mobile device will be able to act as soon as a possible interruption of the communication has been identified.

According to the present invention, the step of identifying, when the communication signal is interrupted or attenuated, whether the mobile device is moving or not, by means of movement detection application, is shown in step four 130. The use of the movement detection application allows to monitor whether the mobile device is at a stationary position or whether the mobile device is actually moving away from its initial position wherein the mobile device was in communication with the stationary device.

Where it is established that the mobile device is not moving with respect to the stationary device, as shown in step five 140, the information on the mobile device continues to be displayed. This allows the user of the mobile device who apparently did not move from their initial position to retain access to the information which is on display on the mobile device.

However, where it is established that the mobile device is moving with respect to the stationary device, apparently the mobile device has been moving away from its initial position, and the information will no longer be displayed on the mobile device. If the user of the mobile device is apparently moving away from their initial position, the information which was on display on the mobile device does no longer need to remain accessible for the user of the mobile device. The fact that the information is no longer displayed on the mobile device gives rise to the opportunity to replace the information on the mobile device with information which could be the result of communication of the mobile device with a second or further stationary device, provided that the mobile device is in the vicinity of the second or further stationary device in order to allow short distance communication with said second or said further stationary device.

It should be understood that the production of the communication signal between a stationary device and a mobile device could be used with any adapted communication protocol being used for communication between a stationary device and a mobile device. This means that the method according to the present invention includes communication obtained using NFC protocol between a stationary device such as, for instance, a tag and a mobile device provided with an application adapted to read such a tag.

Alternatively, the method according to the present invention could be used for wireless communication between one or more beacons in a form of a transmitter and a mobile device adapted to communicate with said one or more beacons.

The present invention is specifically adapted to allow communication between a mobile device and one or more iBeacons. iBeacons have been developed and made available by Apple^{®}. iBeacons typically use small wireless sensors equipped with Bluetooth lowenergy (BLE). iBeacons communication runs on iOS 7 which allows iBeacons to communicate with IPhones commercialised by Apple^{®} but which also allows communication between the iBeacons and Android mobile devices.

## Claims

1. A method for displaying information on a mobile device, depending on the position of the mobile device with respect to at least one stationary device, such as an iBeacon, the mobile device and the stationary device being configured for short distance communication in a determined zone around the stationary device, wherein the mobile device comprises a display and positioning and/or movement detection application, the method comprising the steps of:
a) establishing communication between the mobile device and a first stationary device to thereby generate a communication signal which enables the mobile device to display information;
b) receiving the communication signal and displaying the corresponding information on the mobile device;
c) monitoring the communication between the mobile device and the stationary device to identify possible interruption or attenuation of the communication;
d) in case the mobile device comprises a positioning application, using said positioning application to generate a first parameter, wherein the value of the first parameter corresponds to a first geographical position of the mobile device; and according to a first option:
e) detecting an interruption or attenuation of the communication signal,
f1) using the positioning application to generate a second parameter, wherein the value of the second parameter corresponds to a second geographical position of the mobile device;
f2) comparing the value of the first parameter with the value of the second parameter to retrieve a matching value;
f3) in case a matching value is retrieved, continuing to display the information on the mobile device, and
f4) in case no matching value is retrieved, ending the display of the information on the mobile device;
or according to second option:
g1) in case the mobile device comprises a movement detection application, using the movement detection application to generate a third parameter, wherein the value of the third parameter corresponds to either a detection of movement of the mobile device or a detection of non-movement of the mobile device;
g2) in case the third parameter corresponds to non-movement of the mobile, continuing to display the information on the mobile device, and
g3) in case the third parameter corresponds to movement of the mobile device, ending the display of the information on the mobile device.

2. Method according to claim 1, wherein the position and/or movement detection application comprises a Global Positioning System (GPS) application.

3. Method according to claim 1 or 2, wherein the movement detection application uses input data from a gyroscope.

4. Method according to claim 1, 2 or 3, wherein the stationary device and the mobile device are configured for communicating using Near Field Communication (NFC) protocol.

5. Method according to claim 1, 2 or 3, wherein the stationary device and the mobile are configured to allow communication using a Quick Response Code (QR Code).

6. Method according to claim 1, 2 or 3, wherein the stationary device is a transmitter.

7. Method according to claim 6, wherein the stationary device is adapted for communication with the mobile device using Bluetooth low energy^{™} (BLE) technology.

8. Method according to claim 1, 2 or 3, wherein the stationary device is adapted to be detected by the mobile device in the determined zone around said stationary device.

9. Method according to any preceding claims, wherein the method further comprises creating a database comprising a look-up table, wherein the look-up table comprises values of a third parameter associated with at least one stationary device and the corresponding geographical location of said at least one stationary device.

10. A computer program product comprising stored computer-executable instructions, which, when executed by a computer system, implements the method of any of claims 1 to 9.

11. A mobile device comprising communication means for allowing short distance communication with at least one stationary device to allow the mobile device to receive a communication signal from said at least one stationary device, the mobile device further comprising a display for displaying information corresponding to the communication signal received by the mobile device, a positioning or movement detection application with a positioning application adapted to generate a parameter corresponding to the geographical position of said mobile device or a movement detector adapted to generate a parameter corresponding to the movement or non-movement of the mobile device, means for monitoring the communication between the mobile device and said at least one stationary device, and processing means adapted to either generate an instruction for the movement detector to generate a parameter relating to the (non) movement of the mobile, or to generate a first instruction for the positioning application to generate a first parameter wherein the value of the first parameter corresponds to the geographical position of the mobile device before interruption or attenuation of a communication between the mobile device and the at least one stationary device, and a second instruction for the positioning application to generate a second parameter, upon interruption or attenuation of the communication between the mobile device and the at least one stationary device, wherein the second parameter corresponds to the geographical position of the mobile device, wherein the processing means are adapted to compare said first and said second parameter to retrieve a matching value.

12. A mobile device according to claim 11, wherein the processing means are adapted to terminate the displaying of said information on said mobile device if the parameter generated by the movement detector corresponds to the movement of the mobile device or if said matching value between the first and second parameter generated by the positioning means is not retrieved.

13. Mobile device according to claims 11 or 12, wherein the movement detection application uses input data from a gyroscope.

14. Mobile device according to claims 11 - 13, wherein the positioning and/or movement detection application comprises a Global Positioning System (GPS) or application.
